Europäisches Patentamt

European Patent Office

Office européen des brevets

(11) Veröffentlichungsnummer: **0 496 330 A2**

# EUROPÄISCHE PATENTANMELDUNG

(21) Anmeldenummer: **92100869.4**

(22) Anmeldetag: **20.01.92**

(51) Int. Cl.5: **G01F 1/74**, G01F 1/716

(30) Priorität: **24.01.91 LU 87879**

(43) Veröffentlichungstag der Anmeldung:
**29.07.92 Patentblatt 92/31**

(84) Benannte Vertragsstaaten:
**BE DE DK ES FR GB GR IT LU NL PT**

(71) Anmelder: **EUROPÄISCHE WIRTSCHAFTSGEMEINSCHAFT (E.W.G.)**
**Bâtiment Jean Monnet, Plateau du Kirchberg**
**L-2920 Luxemburg(LU)**
Anmelder: **SOCIETE NATIONALE ELF AOUITAINE (PRODUCTION)**
**Tour Elf**
**F-92078 Paris la Défense Cédex 45(FR)**

(72) Erfinder: **Krüger, Gottfried Johannes**
**Via Cunardo 37**
**I-21039 Bedero Valcuvia(IT)**

(74) Vertreter: **Weinmiller, Jürgen**
**Lennéstrasse 9 Postfach 24**
**W-8133 Feldafing(DE)**

(54) **Kernspinresonanzverfahren zur Bestimmung des Massenflusses der einzelnen Komponenten einer Mehrkomponentenströmung.**

(57) Die Erfindung bezieht sich auf ein Verfahren zur Bestimmung des Massenflusses der einzelnen Komponenten einer aus mindestens zwei Flüssigkeiten und einem Gas zusammengesetzten Strömung in einem Rohr. Erfindungsgemäß wird auf die Strömung eine Folge magnetischer Hochfrequenzimpulse angewandt, und man mißt den Ausfluß der kernparamagnetischen Magnetisierung und damit der Kernspins aus dem inneren Volumen der Hochfrequenzspule eines Kernresonanzspektrometers, wodurch sich die mittlere Geschwindigkeit und der Volumenanteil der flüssigen Phase ergeben; anschließend wird mittels eines kurzen Hochfrequenz-Einzelimpulses ein freier Induktionsabfall in der Strömung erzeugt und gemessen, dessen Frequenzabhängigkeit mittels einer Fourier-Transformation analysiert wird. Schließlich werden mittels einer Rechneranalyse des Fourierspektrums die einzelnen Volumenanteile der flüssigen Komponenten bestimmt.

Fig. 1

Die Erfindung bezieht sich auf ein Verfahren zur Bestimmung des Massenflusses der einzelnen Komponenten einer aus mindestens zwei Flüssigkeiten und einem Gas zusammengesetzten Strömung in einem Rohr.

Die Erfindung wurde insbesondere für die Massenflußmessung in einer Erdölförderleitung konzipiert, in der das Rohöl zusammen mit Wasser und einem Gasanteil strömt.

Eine bekannte Lösung zur Messung der einzelnen Komponenten des Massenstroms besteht darin, diese Komponenten in einem Separator voneinander zu trennen und dann einzeln zu messen. Eine Messung während des Flusses in einer Ölleitung ist mit diesem Verfahren nicht möglich. Diese nachträgliche Messung ist ungenau, einmal wegen der nicht idealen Trennung der Komponenten, und andererseits wegen des zeitlichen und räumlichen Abstands zwischen dem Ort, an dem die Durchflußmessung interessiert, und dem, an dem sie tatsächlich durchgeführt wird.

In dem Buch "Measuring Techniques in Gas-Liquid Two-Phase Flows", veröffentlicht im Anschluß an das IUTAM Symposium, Nancy, 1983, herausgegeben vom J.M. Delhaye und C. Cognet und verlegt 1984 bei Springer Berlin-Heidelberg, findet sich auf den Seiten 435 bis 454 ein Aufsatz von G.J. Krüger, J. Haupt und R. Weiss mit dem Titel "A nuclear magnetic resonance method for the investigation of two-phase flow". Hier wird mittels einer Carr-Purcell-Meiboom-Gill-Impulsfolge der Ausfluß der kernparamagnetischen Magnetisierung und damit der Kernspins aus dem inneren Volumen der Hochfrequenzspule eines Kernresonanzspektrometers gemessen. Direktes Meßergebnis ist die von einem anfänglichen Maximalwert während der Impulsfolge, welche die Zeitdauer der Messung bestimmt, auf Null abklingende Kernspinechofolge, welche die Ausflußkurve wiedergibt. Diese Kurve enthält die gesamte Information des Zweiphasenflusses und wird dann ausgewertet. Als Resultat ergeben sich die mittlere Geschwindigkeit und der Volumenanteil und damit der Massenfluß der flüssigen Phase. Eine Information über den Volumenanteil und die Geschwindigkeit der einzelnen Komponenten der flüssigen Phase läßt sich mit diesem Verfahren nicht erhalten.

Aufgabe der Erfindung ist es also, ein Verfahren zur Bestimmung des Massenflusses der einzelnen Komponenten einer aus mindestens zwei Flüssigkeiten und einem Gas zusammengesetzten Strömung in einem Rohr anzugeben.

Diese Aufgabe wird erfindungsgemäß durch die im Anspruch 1 definierten Verfahrensschritte gelöst.

Die Erfindung wird nun anhand eines bevorzugten Ausführungsbeispiels mit Hilfe der Zeichnungen näher erläutert.

Figur 1 zeigt schematisch eine Vorrichtung zur Durchführung des erfindungsgemäßen Verfahrens.

Figur 2 zeigt ein Meßsignal, das im ersten Verfahrensschritt auftritt, und

die Figuren 3a bis 3c zeigen die Frequenzanalyse eines im zweiten Verfahrensschritt auftretenden Meßsignals bei unterschiedlichen Strömungsgeschwindigkeiten.

Die Erfindung wurde insbesondere für die Echtzeitmessung von Materialflüssen in der Petrochemie konzipiert. In einem praktisch interessanten Anwendungsfall soll ein Gemisch aus Gasen, Erdöl und Wasser gemessen werden, das durch ein Rohr von zwischen 10 und 20 cm Durchmesser fließt. Die Temperatur dieses Gemisches soll zwischen 25 und 130°C variabel sein und der Druck soll zwischen 2 und 80 Bar liegen.

Das erfindungsgemäße Verfahren beruht auf kernmagnetischen Resonanzeffekten, die bekanntlich zur Untersuchung von Molekularstrukturen herangezogen werden (siehe z.B. das Buch von A. Abragam "The principles of nuclear magnetism", Oxford, 1962).

Besonders erfolgreich wurden Kernresonanzmethoden zur Messung der Geschwindigkeit von Zweiphasenströmungen (siehe das erwähnte Buch von J.M. Delhaye und G. Cognet) oder in der Medizin zur Tomographie angewendet.

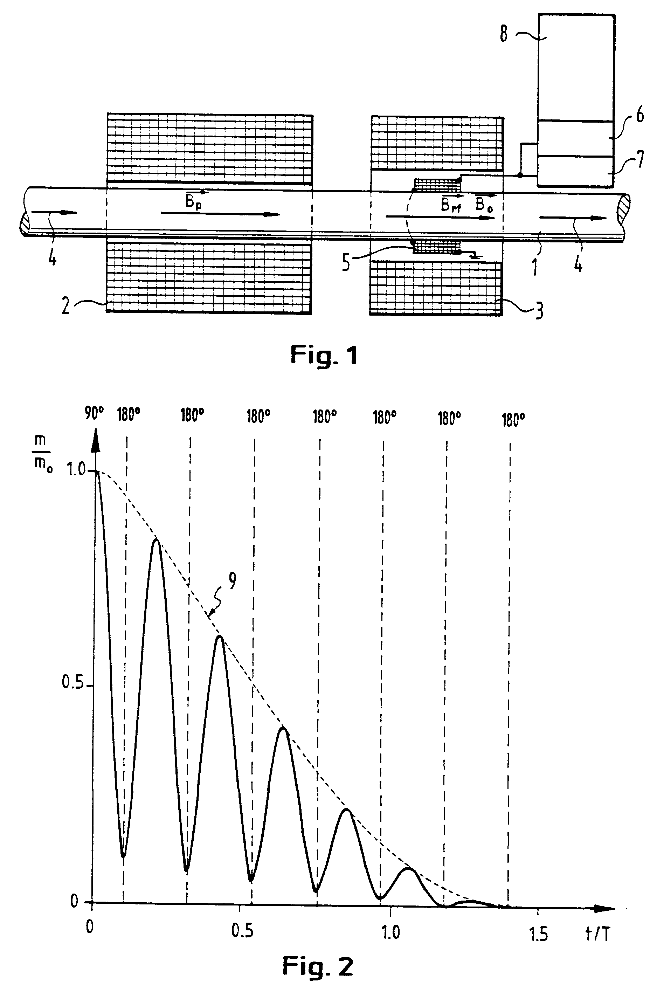

Die Vorrichtung gemäß Figur 1 besitzt einen Polarisationsmagneten 2 und eine Magnetspule 3, die in Strömungsrichtung hintereinander auf einem Rohr 1 sitzen, durch das die zu messende Strömung fließt. Das Rohr ist zumindest im Meßbereich aus einem nichtferromagnetischen Material und fördert die zu messende Mischung entlang eines Pfeils 4. Der Polarisationsmagnet 2 besteht aus einer von Gleichstrom durchflossenen Spule und erzeugt ein Magnetfeld $B_p$ in Richtung des Pfeils 4. In gleicher Weise ist auch die Magnetspule 3 von einem Gleichstrom durchflossen und erzeugt ein magnetisches Meßfeld $B_o$.

Außerdem befindet sich im Meßfeld zwischen der Meßspule 3 und dem Rohr 1 eine Hochfrequenzspule 5, die mit einem Sender 6 und einem Empfänger 7 verbunden ist. Der Sender 6 ist in der Lage, ein Hochfrequenzsignal, beispielsweise ein impulsmoduliertes sinusförmiges Signal einer Frequenz von 10 MHz, in die Hochfrequenzspule 5 einzuspeisen, so daß ein zusätzliches Hochfrequenzfeld $B_{rf}$ im Rohr 1 erzeugt wird.

Das erfindungsgemäße Verfahren setzt sich aus zwei Teilmessungen zusammen: Bei der ersten handelt es sich um ein Meßverfahren der kernmagnetischen Resonanz für Zweiphasenfluß, wie es in der erwähnten Literaturstelle Delhaye und Cognet beschrieben ist. Hier wird mittels einer sogenannten Carr-Purcell-Meiboom-Gill (CPMG)-Impulsfolge der Ausfluß der kernparamagnetischen Magnetisierung und damit der Kernspins aus dem inneren Volumen der Hochfrequenzspule in einem Kernresonanz-Spektrometer gemessen. Direktes Meßergebnis im Empfänger 7, bzw einem diesem zugeordneten Spektrometer 8 ist die von einem anfänglichen Maximalwert während der Impulsfolge, welche die Zeitdauer der Messung bestimmt, auf Null abklingende Kernspinechofolge, welche die Ausflußkurve wiedergibt (siehe Figur 2). Diese Ausflußkurve enthält die gesamte Information des Zweiphasenflusses und wird, wie in der erwähnten Literaturstelle beschrieben, ausgewertet. Als Resultat ergeben sich die mittlere Geschwindigkeit und der Volumenanteil und damit der Massenfluß der flüssigen Phase.

Danach wird eine Kernresonanz-Spektroskopie durchgeführt. Hier wird mittels eines kurzen in die Hochfrequenzspule 5 eingespeisten Hochfrequenzimpulses, der in der Lage ist, die Kernmagnetisierung um einen Winkel von 90° oder weniger zu drehen, ein freier Induktionsabfall erzeugt und gemessen. Die Fourier-Transformation dieses Meßsignals ergibt ein Spektrum, das mittels einer Rechneranalyse nach den Volumenanteilen der einzelnen Spingruppen und Geschwindigkeiten analysiert werden kann. Die endgültige Bestimmung der Volumenanteile erfordert entweder Eichmessungen oder ein Rückrechnen auf den statischen Fall mit Geschwindigkeit Null. Es werden also jeweils mittlere Volumenanteile und Geschwindigkeiten erhalten, die über das innere Volumen der Hochfrequenzspule 5 und über die Meßzeit gemittelt sind.

Es kann empfehlenswert sein, auch über längere Zeiträume zu mitteln, wenn beispielsweise große Gasblasen zusammen mit Flüssigkeitspaketen durch das Rohr 1 gefördert werden.

Unter Umständen kann es sinnvoll sein, den freien Induktionsabfall mittels der im ersten Verfahrensschritt erhaltenen Ausflußkurve zu korrigieren, falls nämlich während des freien Induktionsabfalls schon eine merkliche Zahl von Spins aus der Hochfrequenzspule ausgeflossen ist.

Figur 2 zeigt die Hüllkurve 9 des registrierten Kernspin-Echosignals $m/m_o$ abhängig von der auf die Ausflußzeit T bezogenen Zeit t, falls eine CPMG-Impulsfolge in die Hochfrequenzspule 5 eingespeist wurde. Wie erwähnt können aus diesem Signal die mittlere Geschwindigkeit und der mittlere Volumenanteil der flüssigen Phase errechnet werden.

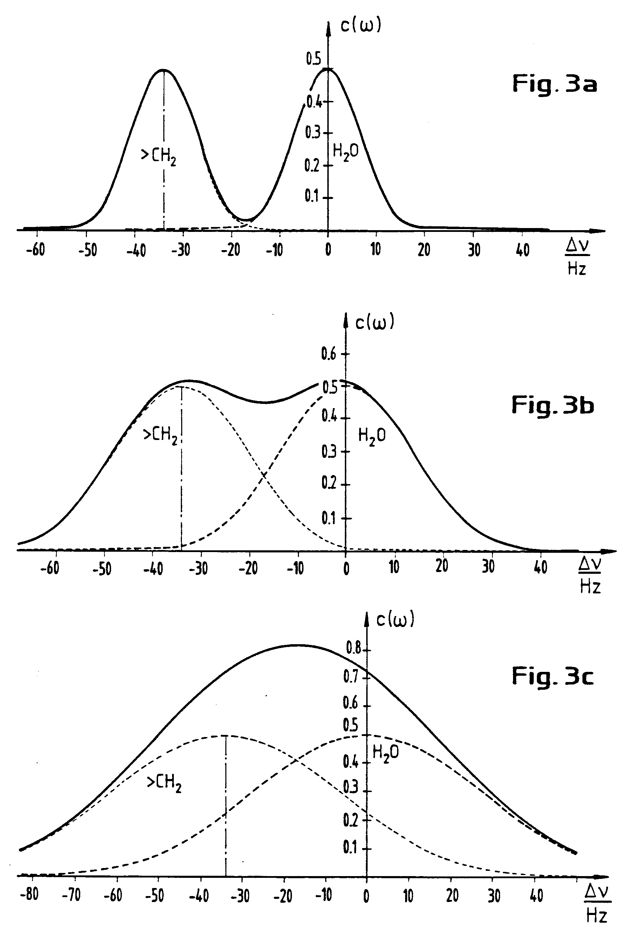

Die Figuren 3a, 3b und 3c zeigen das theoretisch berechnete Frequenzspektrum des Signals, das sich im zweiten Verfahrensschritt ergibt. Hierbei wurde eine reine Pfropfenströmung (sog. plug flow) zugrundegelegt, um die Rechnung zu vereinfachen. Vom Ölanteil wurden nur die Protonen der $CH_2$-Gruppen berücksichtigt. Die Protonenresonanzfrequenz wurde zu 10 MHz und die Homogenität des Magnetfeldes zu 1 ppm über das Meßvolumen angenommen. In den Figuren 3a bis 3c ist jeweils die Kernresonanzlinie der Wasserprotonen und diejenige der $CH_2$-Protonen eingezeichnet bei gleicher Anzahl der Protonen in beiden Gruppen. Da die Breite der Spektrallinien mit der Strömungsgeschwindigkeit zunimmt, erkennt man durch Vergleich der Figur 3a, die einer Geschwindigkeit von 2 m/s entspricht, mit Figur 3b, die einer Geschwindigkeit von 4 m/s entspricht, und mit Figur 3c, die einer Strömungsgeschwindigkeit von 8 m/s entspricht, daß die Spektrallinien mit zunehmender Geschwindigkeit verschwimmen. Eventuelle Einflüsse der Inhomogenität der Magnetfelder müssen durch ein Eichexperiment bei Geschwindigkeit null gemessen und später bei der Auswertung berücksichtigt werden. Die flußbedingte Linienform einer Protonengruppe wird durch eine Fourier-Transformation der erwähnten Ausflußkurve, also der Einhüllenden 9 , erhalten. Die Kernresonanzlinie des Wassers, deren Linienbreite im wesentlichen durch die Geschwindigkeit des Wassers im Gemisch gegeben ist, muß anschließend vom Gesamtspektrum der flüssigen Anteile abgezogen werden. Eine Integration über den Rest des Spektrums liefert dann den Ölvolumenanteil und die Integration über die Wasserlinie den Wasservolumenanteil. Gegebenenfalls müssen Eichmessungen mit nur einer Flüssigkeitskomponente zum Vergleich herangezogen werden, oder man muß mit Hilfe der bekannten Spin-Gitter-Relaxationszeiten auf die Geschwindigkeit Null zurückrechnen. Falls Öl und Wasser die gleiche Geschwindigkeit haben, ist damit die Messung abgeschlossen. Falls dagegen Öl und Wasser unterschiedliche Geschwindigkeiten aufweisen, muß aus der ermittelten Wasserlinie durch erneute Fourier-Transformation zurück in die Zeitabhängigkeit die Wasser-Ausflußkurve berechnet und von der anfangs gemessenen mittleren Ausflußkurve abgezogen werden. Die auf diese Weise erhaltene Restausflußkurve ist dem Erdöl zuzuordnen und erlaubt die Bestimmung des Volumenanteils und der mittleren Geschwindigkeit des Öls.

Falls an die Meßgenauigkeit keine allzu hohen Anforderungen gestellt werden, kann auf den Polarisationsmagneten 2 verzichtet werden, der im wesentlichen nur eine Verbesserung des Signal-Rauschverhältnisses im Meßsignal bewirkt. Der Sender 6 und der Empfänger 7 sind in üblicher Weise einem rechnergesteuerten Kernspinresonanz-Spektrometer 8 zugeordnet, wobei der Rechner die Auswertestrategie optimiert, beispielsweise durch Rückgriff auf und Vergleich mit gespeicherten gesicherten früheren Analysen.

Das erfindungsgemäße Verfahren kann auch zur Massenstrommessung herangezogen werden, falls mehr als zwei flüssige Komponenten in der Strömung vorliegen, sofern sich deren Anteile an dem Spektrum voneinander hinreichend diskriminieren lassen.

**Patentansprüche**

1.  Verfahren zur Bestimmung des Massenflusses der einzelnen Komponenten einer aus mindestens zwei Flüssigkeiten und einem Gas zusammengesetzten Strömung in einem Rohr, dadurch gekennzeichnet, daß auf die Strömung eine Folge magnetischer Hochfrequenzimpulse angewandt wird und der Ausfluß der kernparamagnetischen Magnetisierung und damit der Kernspins aus dem inneren Volumen der Hochfrequenzspule eines Kernresonanzspektrometers gemessen wird, wodurch sich die mittlere Geschwindigkeit und der Volumenanteil der flüssigen Phase ergeben, daß dann mittels eines kurzen Hochfrequenz-Einzelimpulses ein freier Induktionsabfall in der Strömung erzeugt und gemessen wird, dessen Zeitabhängigkeit mittels einer Fourier-Transformation analysiert wird, und daß schließlich mittels einer Rechneranalyse des Fourierspektrums die einzelnen Volumenanteile der flüssigen Komponenten bestimmt werden.

2.  Verfahren nach Anspruch 1, dadurch gekennzeichnet, daß mindestens eine der Messungen über wählbare Zeiträume gemittelt wird.

**Fig. 1**

**Fig. 2**

Fig. 3a

Fig. 3b

Fig. 3c